# DEMANDE DE BREVET EUROPEEN

(11) **EP 4 371 858 A1**
(43) Date de publication de la demande: **22.05.2024**
(21) Numéro de dépôt: 23202214.5
(22) Date de dépôt: 06.10.2023
(51) Int. Cl.: B62D 25/08, B62D 25/20, B60K 1/04

(54) **VEHICULE AVEC BOITE D APPUI POUR BRANCARD SOUS-PLANCHER CREUX**

(30) Priorité: 17.11.2022 FR 2211972
(71) Demandeur: Stellantis Auto SAS, 78300 Poissy (FR)
(72) Inventeur: RAHLI, Hamza, 20610 Casablanca (MA); IDALI, Jihana, 46000 Safi (MA); PERU, Marc, 92290 Chatenay Malabry (FR); COIFFIER, FREDERIC, 91310 Monthlery (FR); HUZUN, Dan, 91230 Montgeron (FR)

(57) **Abrégé**

L'invention concerne un véhicule (1) hybride ou électrique comprenant une structure (1a) comportant un plancher (2), une traverse d'assise (4) s'étendant transversalement sous le plancher (2) le long d'un compartiment de batterie (5) et au moins un brancard sous-plancher (3) s'étendant longitudinalement sous le plancher (2), le brancard sous-plancher (3) étant creux et présentant une section constante. La structure (1a) comprend une boîte d'appui (6) positionnée sur la traverse d'assise (4), le brancard sous-plancher (3) s'étendant jusqu'à la boîte d'appui (6) de manière à présenter une extrémité (7) en regard de la boîte d'appui (6).

## Description

### DOMAINE TECHNIQUE DE L'INVENTION

L'invention concerne, de façon générale, le domaine technique des véhicules automobiles électriques ou hybrides, et plus particulièrement leurs structures en vue de l'absorption de l'énergie d'impact en cas de choc.

L'invention concerne plus particulièrement la résistance des brancards sous-planchers à corps creux, aux chocs frontaux.

### ÉTAT DE LA TECHNIQUE ANTÉRIEURE

Parmi les éléments de structure du soubassement d'un véhicule, le brancard est conçu pour transmettre le plus d'efforts en cas de choc frontal.

La structure du véhicule comprend un plancher, une traverse d'assise s'étendant transversalement sous le plancher le long d'un compartiment de batterie implanté sous l'assise des sièges et généralement deux brancards comprenant chacun une portion usuellement appelé brancard sous-plancher car fixée sous le plancher du véhicule. Chaque brancard sous-plancher s'étend longitudinalement le long et sous le plancher jusqu'à la traverse d'assise.

Chaque brancard sous-plancher est formé à partir d'une tôle emboutie et se présente sous la forme d'un corps creux. Ce corps creux montre une proximité au sol très importante. Cela ne pose aucun problème dans les véhicules à motorisation thermique, mais limite les possibilités d'implantation de batteries sous-plancher dans le cadre de véhicules de type hybride ou électrique. Les batteries doivent alors enjamber les brancards sous-planchers, ce qui limite le nombre ou la taille des modules de batteries pouvant être implantés.

Une solution pour augmenter la taille des batteries sous-plancher est non pas d'enjamber les brancards sous-planchers mais de les couper. Le relais pour le passage d'effort serait alors pris par la coque de la batterie ou par des cadres de protection conçus et agencés à cet effet.

Néanmoins, le fait de couper les brancard sous-planchers présente le risque de dégrader la tenue du soubassement lors des chocs frontaux à grande vitesse.

De plus, le brancard sous-plancher présente une zone à section réduite pour pouvoir être raccordé à la traverse d'assise par un bord tombé.

Cependant, cette zone à section réduite entraîne une zone de faiblesse pour la résistance aux efforts lors d'un choc frontal. En effet, lors d'un choc frontal, il se produit un pli au niveau de la zone à section réduite, entraînant l'effondrement du plancher d'assise sous l'effet du poids des modules de batteries.

### EXPOSE DE L'INVENTION

L'invention a pour objectif de répondre aux problèmes de l'art antérieur en proposant un véhicule hybride ou électrique comprenant une structure de soubassement comportant des brancards sous-planchers à corps creux fournissant une meilleure résistance en cas de choc frontal, en évitant le fléchissement du brancard sous-plancher.

Pour ce faire est proposé, selon un premier aspect de l'invention, un véhicule hybride ou électrique comprenant une structure comportant un plancher, une traverse d'assise s'étendant transversalement sous le plancher le long d'un compartiment de batterie et au moins un brancard sous-plancher s'étendant longitudinalement sous le plancher. Le brancard sous-plancher est creux et présente une section constante.

Selon l'invention, la structure comprend une boîte d'appui positionnée sur la traverse d'assise. Le brancard sous-plancher s'étend jusqu'à la boîte d'appui de manière à présenter une extrémité en regard de la boîte d'appui.

L'invention fournit ainsi un véhicule hybride ou électrique comprenant une structure de soubassement comportant des brancards sous-planchers à corps creux fournissant une meilleure résistance en cas de choc frontal, en évitant le fléchissement du brancard sous-plancher.

Cette solution permet d'éviter d'utiliser un brancard sous-plancher creux comprenant une zone à section réduite reliée à la traverse d'assise.

L'invention permet d'utiliser une structure de véhicule comprenant des brancards sous-planchers et des boîtes d'appui creuses, formés par une tôle emboutie au lieu de tubes, tout en obtenant un résultat équivalent lors des tests de choc frontaux. L'utilisation de corps creux permet de réduire le nombre de pièces, le temps de fabrication, de réaliser des économie de matière (en réduisant l'épaisseur des pièces) et de masse. Elle permet également d'augmenter l'autonomie des batteries et de prolonger leur durée de vie.

Selon un mode de réalisation, un espace d est prévu entre l'extrémité du brancard sous-plancher et la boîte d'appui.

De préférence, l'espace d est compris entre 3 mm et 10 mm.

Cet espace d permet de former un jeu entre l'extrémité du brancard sous-plancher et la paroi latérale d'appui de la boîte d'appui.

Lors d'un choc frontal, le jeu est rapidement comblé. L'extrémité du brancard sous-plancher, qui présente une section en forme de U ou de pontet, vient en appui contre la paroi latérale d'appui de la boîte d'appui. La boîte d'appui sert de butée pour le brancard sous-plancher.

Selon un autre mode de réalisation, la boîte d'appui comprend un corps creux positionné en regard de la traverse d'assise. Le corps creux fait saillie depuis la traverse d'assise vers une direction opposée au plancher.

La boîte d'appui peut se déformer et absorber une partie du choc car elle est creuse. Le brancard sous-plancher est très peu déformé et ne pli pas.

Selon un autre mode de réalisation, la boîte d'appui comprend une base s'étendant depuis une première extrémité du corps creux, vers le compartiment de batterie. La base est fixée au plancher par des premiers moyens de fixation.

Le fait que le corps creux et les premiers moyens de fixation soient distants permet au corps creux de servir de butée et éventuellement d'être déformé lors d'un choc frontal mais sans arracher les premiers moyens de fixation et en évitant une contrainte mécanique trop importante sur la traverse d'assise.

Selon un autre mode de réalisation, le corps creux présente une forme parallélépipédique et comprend une paroi de fond à une deuxième extrémité, opposée à la première extrémité. Le corps creux comprend quatre parois latérales reliant la base à la paroi de fond, dont une paroi latérale d'appui positionnée en regard de l'extrémité du brancard sous-plancher.

Selon un autre mode de réalisation, la paroi latérale d'appui est prolongée par une portion s'étendant le long d'une paroi latérale de la traverse d'assise, vers le plancher.

Cette solution permet d'améliorer la fonction de butée car la portion est arrêtée par la paroi latérale de la traverse d'assise, lors d'un choc frontal.

Selon un autre mode de réalisation, l'extrémité du brancard sous-plancher et la paroi latérale d'appui du corps creux présentent une hauteur de recouvrement h comprise entre 50 % et 100 %.

Ceci permet au corps creux de parfaitement assurer sa fonction de butée.

Selon un autre mode de réalisation, le véhicule comprend une batterie logée dans le compartiment de batterie et une patte de fixation comprenant une première portion fixée à la base de la boîte d'appui par les premiers moyens de fixation et une deuxième portion fixée à la batterie.

La boîte d'appui présente deux fonctions car elle sert de butée et également de point d'attache pour fixer la batterie.

Selon un autre mode de réalisation, les premiers moyens de fixation comprennent une entretoise positionnée entre la base de la boîte d'appui et la patte de fixation. Les premiers moyens de fixation comprennent une vis comportant une tige filetée s'insérant dans un orifice prévu dans la patte de fixation et dans l'entretoise pour se visser dans un orifice fileté prévu sur la base.

Ceci fournit un moyen de fixation résistant et permettant à la patte de fixation d'être à la hauteur de la batterie.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue schématique d'une structure d'un véhicule comprenant un brancard sous-plancher et une boîte d'appui, selon un mode de réalisation de l'invention ;
[Fig. 2] : une vue schématique détaillée de la boîte d'appui de la figure 1 en regard du brancard sous-plancher ;
[Fig. 3] : une vue schématique détaillée de la boîte d'appui de la figure 1 seule ;
[Fig. 4] : une autre vue schématique détaillée de la boîte d'appui seule ;
[Fig. 5] : une vue schématique d'une patte de fixation de batterie fixée à la boîte d'appui.

Pour plus de clarté, les éléments identiques ou similaires sont repérés par des signes de référence identiques sur l'ensemble des figures.

### DESCRIPTION DÉTAILLÉE D'UN MODE DE RÉALISATION

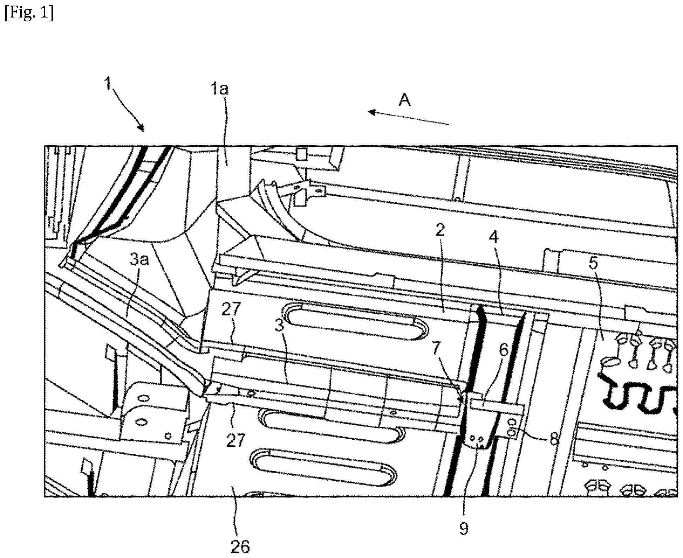

La figure 1 illustre un véhicule 1 hybride ou électrique comprenant une structure 1a comportant un plancher 2 et une traverse d'assise 4 s'étendant transversalement sous le plancher 2, le long d'un compartiment de batterie 5 suivant une direction transversale qui est perpendiculaire à une direction d'avancement A du véhicule 1.

Le compartiment de batterie 5 est destiné à loger une batterie 42 qui est communément appelée « pack batterie ». Le pack batterie comprend plusieurs modules de batterie protégées par un caisson.

La structure 1a comprend deux brancards 3a comportant chacun une portion fixée au plancher 2 appelée brancard sous-plancher 3. Chaque brancard sous-plancher 3 s'étend longitudinalement le long et sous le plancher 2 jusqu'à la traverse d'assise 4. Autrement dit, chaque brancard sous-plancher 3 est fixé à une face externe 26 du plancher 2 qui est en regard du sol lorsque le véhicule 1 est posé sur le sol. Un seul brancard sous-plancher 3 est représenté par simplification.

Le brancard sous-plancher 3 est creux et présente une section sensiblement constante pour augmenter sa solidité et éviter les zones de faiblesse en cas de choc frontal.

Le brancard sous-plancher 3 est formé d'une tôle emboutie et pliée. Le brancard sous-plancher 3 présente une section générale en forme de U et deux rebords latéraux 27 soudés à la face externe 26 du plancher 2.

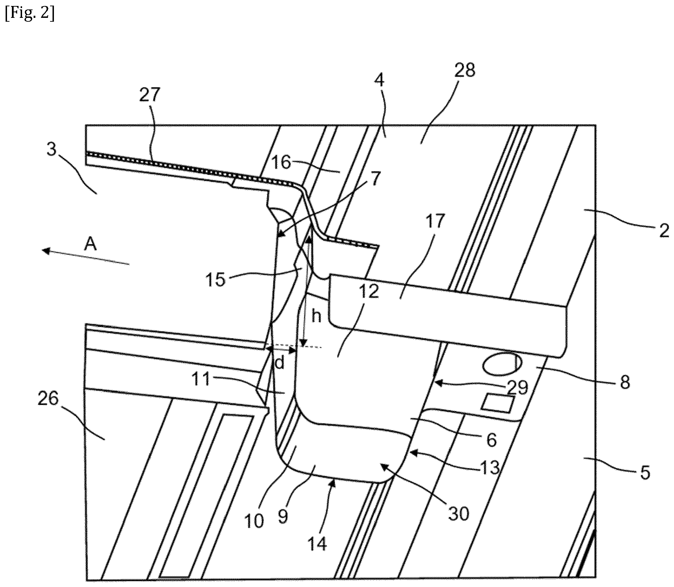

Le brancard sous-plancher 3 comprend une extrémité 7 positionnée en regard d'une paroi latérale 16 de la traverse d'assise 4, comme illustré sur la figure 2. L'extrémité 7 présente une section en forme de U ou de pontet.

La structure 1a comprend une boîte d'appui 6 positionnée sur une face externe 28 de la traverse d'assise 4 et en regard d'une extrémité 7 du brancard sous-plancher 3.

La boîte d'appui 6 comprend un corps creux 9 positionné en regard de la traverse d'assise 4, autrement dit sous la traverse d'assise 4. Le corps creux 9 fait saillie depuis la face externe 28 de la traverse d'assise 4 vers une direction opposée au plancher 2, c'est-à-dire vers le sol.

La boîte d'appui 6 est formée d'une tôle qui est emboutie pour obtenir le corps creux 9.

La boîte d'appui 6 comprend une base 8 s'étendant depuis une première extrémité 29 du corps creux 9, vers le compartiment de batterie 5. La base 8 est fixée au plancher 2 par des premiers moyens de fixation 20.

Le corps creux 9 présente une forme parallélépipédique et comprend une paroi de fond 10 à une deuxième extrémité 30, opposée à la première extrémité 29. Le corps creux 9 comprend quatre parois latérales 11, 12, 13, 14, reliant la base 8 à la paroi de fond 10, dont une paroi latérale d'appui 11 positionnée en regard de l'extrémité 7 du brancard sous-plancher 3.

Sur les figures 1 à 5, le corps creux 9 présente une forme de tronc de pyramide. D'autres formes sont possibles comme des formes cubiques.

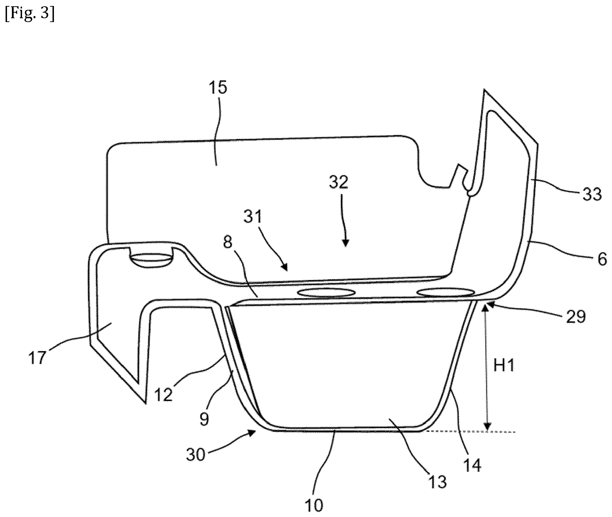

Le corps creux 9 comprend une cavité 31, comme illustré sur la figure 3, et une ouverture 32 positionnée en face de la face externe 28 de la traverse d'assise 4.

Avantageusement, un espace d est prévu entre l'extrémité 7 du brancard sous-plancher 3 et la paroi latérale d'appui 11 de la boîte d'appui 6, comme illustré sur la figure 2.

L'espace d est compris entre 3 mm et 10 mm et de préférence compris entre 5 mm et 7 mm.

Cet espace d permet de former un jeu entre l'extrémité 7 du brancard sous-plancher 3 et la paroi latérale d'appui 11 de la boîte d'appui 6.

Lors d'un choc frontal, le jeu est rapidement comblé et l'extrémité 7 du brancard sous-plancher 3 vient en appui contre la paroi latérale d'appui 11 de la boîte d'appui 6. La boîte d'appui 6 peut se déformer et absorber le choc car elle est creuse. Le brancard sous-plancher 3 est très peu déformé et ne pli pas.

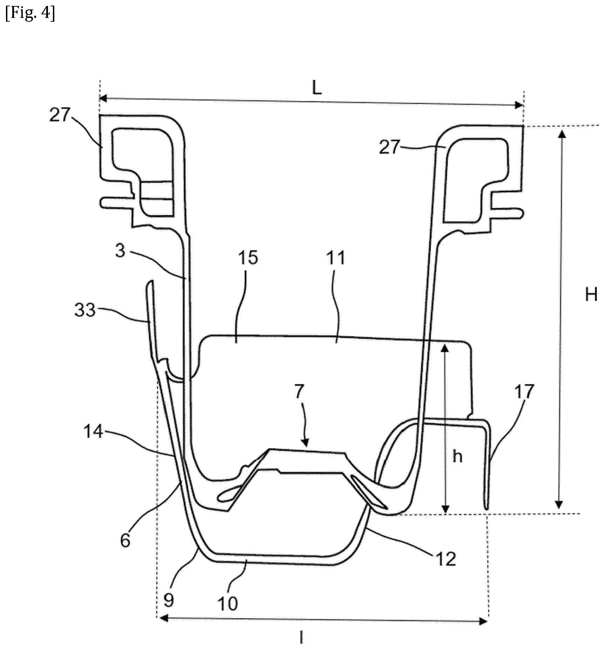

Par exemple, la boîte d'appui 6 peut présenter une base 8 carrée présentant une largeur l de 50 cm, comme illustré sur la figure 4. La hauteur H1 du corps creux 9 par rapport à la base 8 est de 40 cm. La hauteur H du brancard sous-plancher 3 est de 70 cm. La largeur L du brancard sous-plancher 3 est de 60 cm.

La paroi latérale d'appui 11 est prolongée par une portion 15 s'étendant le long de la paroi latérale 16 de la traverse d'assise 4, vers le plancher 2. La paroi latérale 16 de la traverse d'assise 4 est orientée vers l'avant du véhicule 1, c'est-à-dire vers la direction d'avancement A.

La hauteur H1 du corps creux 9 est configurée pour que lors d'un choc frontal suivant la direction d'avancement A du véhicule 1, l'extrémité 7 du brancard sous-plancher 3 vienne en appui sur 50% à 100% de la hauteur de la paroi latérale d'appui 11, prolongée de la portion 15. La hauteur de recouvrement h entre l'extrémité 7 du brancard sous-plancher 3 et la paroi latérale d'appui 11 est alors comprise entre 50% et 100%.

De préférence, la hauteur de recouvrement h est de 70%.

La hauteur de recouvrement h entre l'extrémité 7 du brancard sous-plancher 3 et la paroi latérale d'appui 11 de la boîte d'appui 6 en comptant la portion 15, est de 35 cm, par exemple.

La boîte d'appui 6 comprend un rebord 17 s'étendant vers une direction opposée à la traverse d'assise 4 et suivant la direction d'avancement A.

Le rebord 17 s'étend le long d'une paroi latérale 12 du corps creux 9 et de la base 8. Le rebord 17 est formé par un pliage d'une partie de la base 8.

En variante, la boîte d'appui 6 comprend une extension 33 formée par pliage d'une partie de la base 8 qui est dirigée vers une direction opposée au rebord 17.

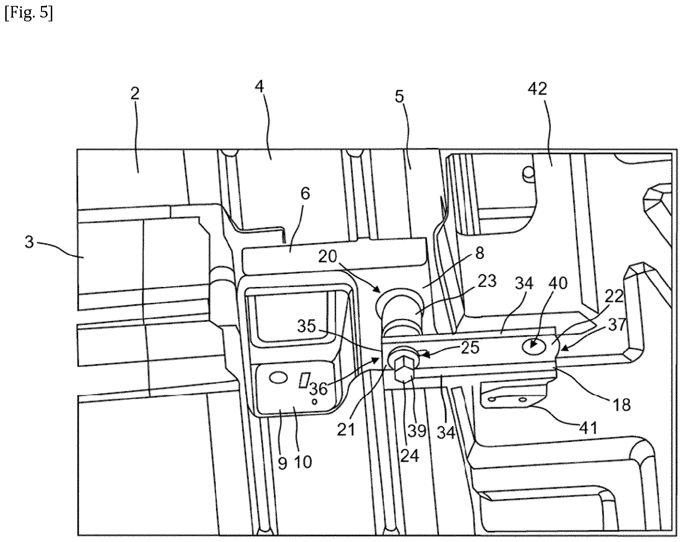

Le véhicule 1 comprend une batterie 42 logée dans le compartiment de batterie 5 et une patte de fixation 18 comprenant une première portion 21 fixée à la base 8 de la boîte d'appui 6 par les premiers moyens de fixation 20 et une deuxième portion 22 fixée à la batterie 42, comme illustré sur la figure 5.

La patte de fixation 18 présente une forme rectangulaire et comprend deux rebords 34 opposés, faisant saillie depuis une partie centrale 35 et permettant de renforcer la tenue mécanique de la patte de fixation 18.

La première portion 21 est positionnée à une première extrémité 36 de la patte de fixation 18 et la deuxième portion 22 est positionnée à une deuxième extrémité 37 de la patte de fixation 18.

Les premiers moyens de fixation 20 sont positionnés à la première extrémité 36 de la patte de fixation 18.

Les premiers moyens de fixation 20 comprennent une entretoise 23 de forme cylindrique positionnée entre la base 8 de la boîte d'appui 6 et la patte de fixation 18. L'entretoise 23 s'étend le long du corps creux 9, sensiblement sur toute sa hauteur H1, suivant une direction opposée à la traverse d'assise 4.

Les premiers moyens de fixation 20 comprennent une vis 24 comportant une tige filetée s'insérant dans un orifice 25 prévu dans la patte de fixation 18 et dans l'entretoise 23 pour se visser dans un orifice fileté prévu sur la base 8.

Pour fixer la patte de fixation 18 à la boîte d'appui 6, la vis 24 est vissée dans l'orifice fileté de la base 8 de façon qu'une tête de vis 38 vienne serrer la patte de fixation 18 contre l'entretoise 23.

La patte de fixation 18 comprend des deuxièmes moyens de fixation (non représentés) pour fixer la deuxième extrémité 37 de la patte de fixation 18 à la batterie 42. Les deuxièmes moyens de fixation comprennent une vis s'insérant dans un deuxième orifice 40 prévu à la deuxième extrémité 37 de la patte de fixation 18 et se vissant dans un orifice fileté prévu dans le carter de la batterie 42.

La patte de fixation 18 s'étend suivant la direction d'avancement A et est positionnée sensiblement à la même hauteur que la paroi de fond 10 du corps creux 9. La patte de fixation 18 est distante du corps creux 9.

En variante, la patte de fixation 18 peut comprendre une ailette 41 fixée à la batterie 42.

En variante, l'espace d est supprimé et l'extrémité 7 du brancard sous-plancher 3 est en contact avec la paroi latérale d'appui 11 de la boîte d'appui 6.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Véhicule (1) hybride ou électrique comprenant une structure (1a) comportant un plancher (2), une traverse d'assise (4) s'étendant transversalement sous le plancher (2) le long d'un compartiment de batterie (5) et au moins un brancard sous-plancher (3) s'étendant longitudinalement sous le plancher (2), le brancard sous-plancher (3) étant creux et présentant une section constante, **caractérisé en ce que** la structure (1a) comprend une boîte d'appui (6) positionnée sur la traverse d'assise (4), le brancard sous-plancher (3) s'étendant jusqu'à la boîte d'appui (6) de manière à présenter une extrémité (7) en regard de la boîte d'appui (6).

2. Véhicule (1) selon la revendication 1, **caractérisé en ce qu'**un espace d est prévu entre l'extrémité (7) du brancard sous-plancher (3) et la boîte d'appui (6).

3. Véhicule (1) selon la revendication 2, **caractérisé en ce que** l'espace d est compris entre 3 mm et 10 mm.

4. Véhicule (1) selon l'une quelconque des revendications 1 à 3, **caractérisé en ce que** la boîte d'appui (6) comprend un corps creux (9) positionné en regard de la traverse d'assise (4), le corps creux (9) faisant saillie depuis la traverse d'assise (4) vers une direction opposée au plancher (2).

5. Véhicule (1) selon la revendication 4, **caractérisé en ce que** la boîte d'appui (6) comprend une base (8) s'étendant depuis une première extrémité (29) du corps creux (9), vers le compartiment de batterie (5), la base (8) étant fixée au plancher (2) par des premiers moyens de fixation (20).

6. Véhicule (1) selon la revendication 5, **caractérisé en ce que** le corps creux (9) présente une forme parallélépipédique et comprend une paroi de fond (10) à une deuxième extrémité (30), opposée à la première extrémité (29), et quatre parois latérales (11, 12, 13, 14) reliant la base (8) à la paroi de fond (10), dont une paroi latérale d'appui (11) positionnée en regard de l'extrémité (7) du brancard sous-plancher (3).

7. Véhicule (1) selon la revendication 6, **caractérisé en ce que** la paroi latérale d'appui (11) est prolongée par une portion (15) s'étendant le long d'une paroi latérale (16) de la traverse d'assise (4), vers le plancher (2).

8. Véhicule (1) selon la revendication 7, **caractérisé en ce que** l'extrémité (7) du brancard sous-plancher (3) et la paroi latérale d'appui (11) du corps creux (9) présentent une hauteur de recouvrement h comprise entre 50% et 100%.

9. Véhicule (1) selon l'une quelconque des revendications 5 à 8, **caractérisé en ce qu'**il comprend une batterie (42) logée dans le compartiment de batterie (5) et une patte de fixation (18) comprenant une première portion (21) fixée à la base (8) de la boîte d'appui (6) par les premiers moyens de fixation (20) et une deuxième portion (22) fixée à la batterie (42).

10. Véhicule (1) selon la revendication 9, **caractérisé en ce que** les premiers moyens de fixation (20) comprennent une entretoise (23) positionnée entre la base (8) de la boîte d'appui (6) et la patte de fixation (18) et une vis (24) comportant une tige filetée s'insérant dans un orifice (25) prévu dans la patte de fixation (18) et dans l'entretoise (23) pour se visser dans un orifice fileté prévu sur la base (8).
